# EUROPÄISCHE PATENTANMELDUNG

(11) **EP 2 177 807 A2**
(43) Veröffentlichungstag der Anmeldung: **21.04.2010**
(21) Anmeldenummer: 09012065.0
(22) Anmeldetag: 23.09.2009
(51) Int. Cl.: F16L 23/08

(54) **Bandschelle**

(30) Priorität: 17.10.2008 DE 102008052229
(71) Anmelder: HYDAC Accessories GmbH, 66280 Sulzbach/Saar (DE)
(72) Erfinder: Hiß, Helmut, 75228 Ispringen (DE); Caspari, Jochen, 66606 St. Wendel (DE)
(74) Vertreter: Bartels & Partner

(57) **Zusammenfassung**

2. Eine Bandschelle mit einem flachen, insbesondere metallischen Spannband (1), das mittels eines an seinen Enden (9, 11) befindlichen Spannverschlusses (3) spannbar ist, und mit an der Innenseite (12) des Spannbandes (1) befindlichen Halteteilen (25), die im Bereich beider Seitenränder (18) des Spannbandes (1) in Abständen voneinander angeordnete Klemmbereiche (31) bilden, wobei die Halteteile (25) an einem an der Innenseite (12) des Spannbandes (1) anliegenden flachen, vorzugsweise metallischen Einlegeband (17) durch Flächenteile (20) desselben gebildet sind, die aus einer Grundfläche (24) des Einlegebandes (17) hochgestellt sind, ist dadurch charakterisiert, dass zumindest ein Teil dieser Flächenteile (20) von der Mittellinie (M) des Einlegebandes (17) derart weg nach außen geneigt ist, dass zumindest im montierten Zustand der Bandschelle der freie Abstand (X) zwischen den Enden (22) der entlang den beiden Seitenrändern (18) paarweise gegenüberliegenden Flächenteilen (20) einen größeren Abstand (X) voneinander einnimmt als die vorgebbare Breite (Y) der Grundfläche (24) des Einlegebandes (17) ist.

## Beschreibung

Die Erfindung betrifft eine Bandschelle mit einem flachen, insbesondere metallischen Spannband, das mittels eines an seinen Enden befindlichen Spannverschlusses spannbar ist, und mit an der Innenseite des Spannbandes befindlichen Halteteilen, die im Bereich beider Seitenränder des Spannbandes in Abständen voneinander angeordnete Klemmbereiche bilden, wobei die Halteteile an einem an der Innenseite des Spannbandes anliegenden flachen, vorzugsweise metallischen Einlegeband durch Flächenteile desselben gebildet sind, die aus einer Grundfläche des Einlegebandes hochgestellt sind.

Bandschellen dieser Art sind bekannt, siehe beispielsweise die Gebrauchsmusterschrift DE-U-92 04 571. Um im Hinblick auf die fehlende Nachgiebigkeit des metallischen Spannbandes selbst eine gewisse Nachgiebigkeit des eigentlichen Klemmbereiches, in dem die Schelle mit einem zu klemmenden Gegenstand zusammenwirkt, zur Verfügung zu stellen, sind bei der erwähnten bekannten Lösung als Halteteile, die die eigentlichen Klemmbereiche bilden, Flächenteile vorgesehen, die durch Verformen beider Seitenränder des Spannbandes selbst gebildet sind. Genauer gesagt handelt es sich hierbei um an beiden Seitenrändern des Spannbandes senkrecht aus dessen Fläche hochgestellte, leistenförmige Flächen, die voneinander abgesetzt sind.

Durch die US-A-2 424 436 ist darüber hinaus eine Bandschelle mit einem flachen metallischen Spannband bekannt, das mit einem an seinem Ende befindlichen Spannverschluß spannbar ist und an seiner Innenseite Halteteile mit Klemmbereichen aufweist. Dabei sind die Halteteile an einem an der Innenseite des Spannbandes anliegenden metallischen, aus Segmenten bestehenden Einlegeband durch aus der Fläche des Einlegebandes hochgestellte Flächenteile gebildet, wobei die Flächenteile ausgehend von der Mittellinie des Bandes mit ihren freien Enden aufeinander zugeneigt sind. Hierdurch wird eine Art zangenartiger Klemmspalt gebildet, über den sich im montierten Zustand der Bandschelle ringförmige Flanschteile von zu verbindenden, medienführenden Rohrsegmenten klemmend gegeneinander festlegen lassen.

Vergleichbare Lösungen, bei denen im montierten Zustand der Bandschelle der freie Abstand zwischen den Enden der entlang den beiden Seitenrändern paarweise gegenüberliegenden Flächenteilen einen deutlich geringeren Abstand voneinander einnimmt als die vorgebbare Breite der Grundfläche des Einlegebandes für das metallische Spannband der Bandschelle, ist unter Bildung des genannten, sich zangenartig verengenden Klemmspalts durch die US-A-2 548 216 aufgezeigt. Aufgrund des zangenartigen Angriffs der aufeinander zugeneigten Enden der insoweit benachbart gegenüberliegend hochgestellten Flächenteilen des Einlegebandes kommt es beim Anziehen des Spannbandes zwecks Festlegen der Bandschelle über den Spannverschluß entlang der Berührlinien mit den angesprochenen ringförmigen Flanschteilen zu sehr hohen Preß- und Anlagekräften, die gegebenenfalls zu einer Schädigung des Flanschteilmaterials führen können. Auch gestaltet sich der Festlegevorgang wenig montagefreundlich, da die ringförmigen Flanschteile in den entsprechend verengten Klemmspalt einzusetzen sind, was nicht hemmnisfrei erfolgt.

Im Hinblick auf diesen Stand der Technik liegt der Erfindung die Aufgabe zugrunde, eine Bandschelle der betrachteten Art zur Verfügung zu stellen, die sich demgegenüber in ausgesprochen montagefreundlicher Weise festlegen läßt und die zu keiner Schädigung des Flanschteilmaterials führt.

Erfindungsgemäß ist diese Aufgabe durch eine Bandschelle gelöst, die die Merkmale des Patentanspruches 1 in seiner Gesamtheit aufweist.

Dadurch, dass gemäß dem kennzeichnenden Teil des Patentanspruches 1 zumindest ein Teil der hochgestellten Flächenteile des Einlegebandes von seiner Mittellinie derart weg nach außen geneigt ist, dass zumindest im montierten Zustand der Bandschelle der freie Abstand zwischen den Enden der entlang den beiden Seitenrändern paarweise gegenüberliegenden Flächenteilen einen größeren Abstand voneinander einnimmt als die vorgebbare Breite der Grundfläche des Einlegebandes ist, läßt sich die Bandschelle in einfacher Weise auf ringförmige Flanschteile von zu verbindenden medienführenden Rohrsegmenten gleitend aufschieben, wobei es dabei zu einem weiteren Aufspreizvorgang der voneinander weggeneigten Enden der Flächenteile kommen kann. Mit zunehmendem Festlege- und Aufschiebvorgang erhöhen sich die Klemmkräfte über die hochgestellten Flächenteile, die in flächige Anlage mit den Außenringflächen der aneinander festzulegenden Flanschteile gelangen, was hemmnisfrei und in materialschonender Weise auch für die festzulegenden Flanschteile erfolgt.

Mithin ergibt sich durch die aufgrund der Klemmkraft eintretende elastische Vergrößerung der nach außen weisenden Neigung der klemmenden Flächenteile eine besonders vorteilhafte elastische Nachgiebigkeit der Gesamtklemmung, was gegenüber dem Stand der Technik eine wesentliche Verbesserung darstellt. Auch erlaubt die erfindungsgemäße Lösung, in einem weiten Temperaturbereich eine fortlaufende Anpassung des Klemmkanals bei weitgehend gleichen Klemmkräften. Insbesondere stellt diese Lösung eine Verbesserung gegenüber Klemmlösungen dar, bei denen Elastomermaterialien als Teil des Spannbandes eingesetzt werden (vgl. hierzu das gattungsfremde Dokument EP-B-0 508 050).

Dadurch, dass die Halteteile eine vom Spannband gesonderte Baukomponente darstellen, nämlich in der Weise, dass die Halteteile an einem an der Innenseite des Spannbandes anliegenden flachen, metallischen Einlegeband ausgebildet sind, ergibt sich zusätzlich zu der elastischen Nachgiebigkeit der weitere Vorteil, dass bei der Änderung des Klemmradius, der durch das Spannen der Schelle erfolgt, eine Ausgleichsverschiebung in Umfangsrichtung zwischen Bereichen des Einlegebandes und der Innenseite des Spannbandes erfolgen kann, woraus eine optimale gleichmäßige Klemmwirkung resultiert. Aufgrund der flächigen Anlage der Flächenteile des Einlegebandes mit den zuordenbaren Flächensegmenten der aneinander festzulegenden ringförmigen Flanschteile im Montage- oder Festlegezustand der Bandschelle ergibt sich gleichfalls ein schonendes Abgleiten ohne schädigende Materialbeanspruchung weder für die Flanschteile noch für das Schellenmaterial.

Die erfindungsgemäße Lösung läßt sich einfach und rationell herstellen, da Spannband und Einlegeband besondere Bauteile sind, wobei das Spannband ohne randseitige Verformung in den gewünschten Innendurchmessern zur Verfügung gestellt werden kann, während das Einlegeband von einem Endlosband in größerer Länge mit gleichbleibender Verformung gebildet werden kann und, in Entsprechung zu den jeweiligen Innendurchmessern, in gewünschter Länge in der Art eines Endlosbandes abgelenkt werden kann.

Bei vorteilhaften Ausführungsbeispielen ist zur Bildung von Halteteilen in Form von Zähnen dreieckähnlicher Gestalt von beiden Seitenrändern des Einlegebandes her in diesem eine Folge von V-förmigen Einschnitten ausgebildet, deren innere Enden einen Abstand von der Mittellinie des Einlegebandes besitzen und deren äußere Öffnungen voneinander einen eine abgestumpfte Spitze der Zähne bildenden Abstand besitzen, die in die freien Enden der Flächenteile ausmünden. Durch Wahl der Anzahl der Zähne und deren Dimensionierung lässt sich die Spannschelle optimal an den jeweils vorgesehenen Einsatzzweck anpassen.

Vorzugsweise sind die die Halteteile bildenden Zähne beider gebildeter Zahnreihen um Biegelinien hochgestellt, die an den Enden der Einschnitte parallel zur Mittellinie des Einlegebandes verlaufen. Das Einlegeband bildet somit innenseitig eine Art U-Profil, wobei die Zähne die Profilschenkel bilden, die durch die Einschnitte unterbrochen sind. Eine derartige Gestaltung eignet sich u. a. besonders für die Bildung einer Klemmverbindung zweier aneinanderliegender Flansche, wobei jede Zahnreihe die Außenseite eines Flansches so übergreift, dass die Innenseiten der Zähne die Klemmbereiche bilden.

Die Anordnung kann so getroffen sein, dass die Halteteile am Einlegeband zueinander paarweise gegenüberliegend sind, so dass ein regelmäßiges Zahnmuster gebildet ist.

Bei besonders vorteilhaften Ausführungsbeispielen sind die Zähne in ihren an ihre Spitze angrenzenden Endabschnitt, der gegenüber dem an den Zahngrund angrenzenden Hauptabschnitt eine wesentlich geringere Höhe besitzt, nach außen hin abgebogen. Diese Gestaltung erleichtert das richtige Positionieren der Schelle bei deren Gebrauch, indem sichergestellt ist, dass die nach außen abgebogenen Endabschnitte beim Schließen der Schelle die Zähne so führen, dass sie beim Spannvorgang elastisch nach außen hin ausgelenkt werden.

Diesbezüglich kann es vorteilhaft sein, dass die Zähne der an einem Seitenrand des Anlegebandes befindlichen einen Zahnreihe sämtlich nach außen hin geneigt sind oder dass, je nach den Gegebenheiten des jeweiligen Einsatzes, die Zähne beider Zahnreihen nach außen hin geneigt sind.

Zur Optimierung der Klemmung kann es auch von Vorteil sein, wenn in einer oder beiden Zahnreihen ein Teil der Zähne nach außen geneigt ist oder gegenüber der Fläche des Einlegebandes ohne Neigung ist. Ebenso kann die Anordnung so getroffen sein, dass in einer oder beiden Zahnreihen die geneigten und nicht geneigten Zähne einander in alternierender Folge abwechseln.

Bei besonders vorteilhaften Ausführungsbeispielen ist das Einlegeband an zumindest einer Verbindungsstelle mit der Innenseite des Spannbandes verbunden. Dies erleichtert die Handhabung beim Montagevorgang und ermöglicht auch eine Vormontage der aus Spannband und Einlegeband gebildeten Einheit.

In besonders vorteilhafter Weise kann die Verbindungsstelle im Bereich der halben Länge des Einlegebandes gelegen sein, das sich von Ende zu Ende des Spannbandes durchgehend erstreckt. Durch die Festlegung lediglich eines mittigen Bereiches des Einlegebandes bleibt dieses auf seinen beiden, an die Verbindungsstelle angrenzenden Hälften für eine relativ zum Spannband erfolgende Verschiebebewegung frei und kann daher beim Spannvorgang eine entsprechende Ausgleichsbewegung durchführen.

Nachstehend ist die Erfindung anhand eines in der Zeichnung dargestellten Ausführungsbeispieles im Einzelnen erläutert. Es zeigen:
- Fig. 1 und 2: eine perspektivische Schrägansicht bzw. Stirnansicht eines Ausführungsbeispieles der erfindungsgemäßen Bandschelle;
- Fig. 3: eine schematische, teils in Draufsicht, teils in perspektivischer Schrägansicht und gegenüber Fig. 1 und 2 in kleinerem Maßstab gezeichnete Darstellung zur Verdeutlichung des Fertigungsvorganges des Einlegebandes für das Ausführungsbeispiel der erfindungsgemäßen Schelle und
- Fig. 4: eine gegenüber Fig. 1 und 2 in stark vergrößertem Maßstab, schematisch vereinfacht und abgebrochen gezeichnete Schnittdarstellung lediglich des durch das Ausführungsbeispiel der Bandschelle gesicherten Verbindungsbereiches zweier Rohrleitungsflansche, wobei im Interesse der Übersichtlichkeit der Darstellung die relativen Proportionen der Bauteile von einer realen Ausführungsform teilweise abweichen.

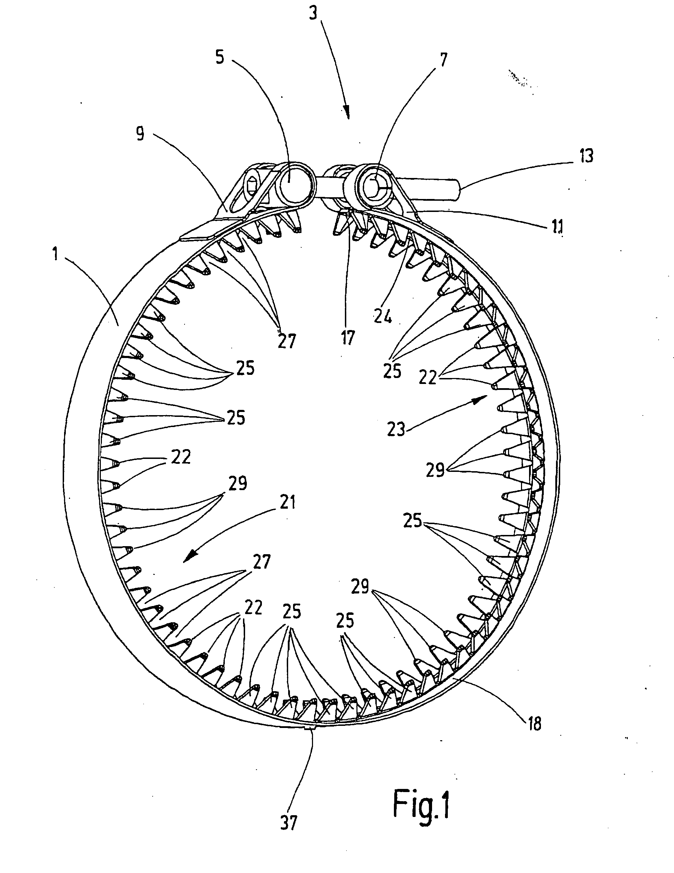

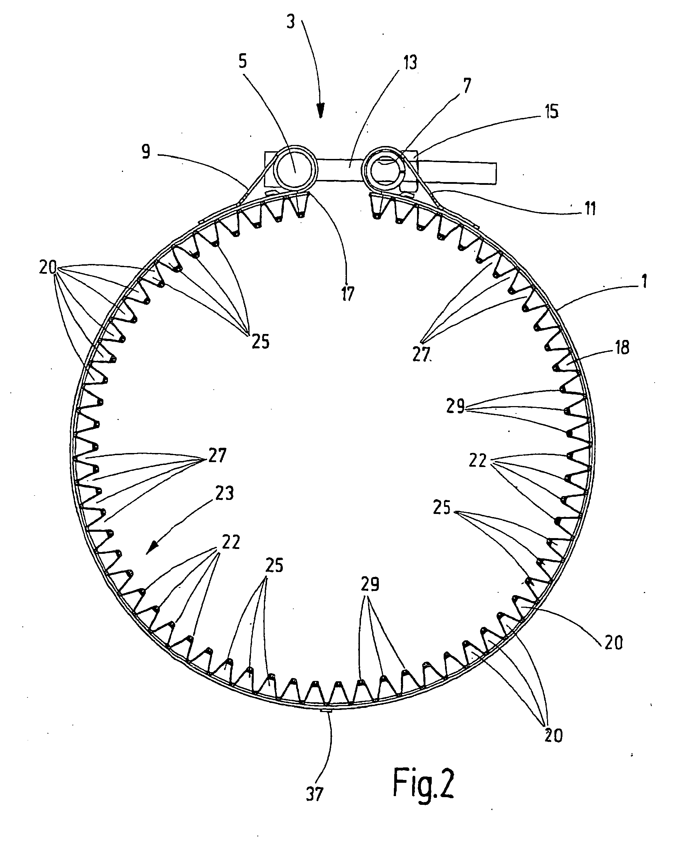

Die in Fig. 1 und 2 als Ganzes gezeigte Bandschelle weist ein aus Stahlblech gefertigtes, flaches Spannband 1 auf, an dessen beiden Enden 9 und 11 ein als Ganzes mit 3 bezeichneter Spannverschluss vorgesehen ist. Dieser ist von üblicher Bauweise, wie sie beispielsweise in dem Dokument EP 0 508 050 B1 aufgezeigt ist, und weist zwei im großen Ganzen kreiszylindrische Zapfen 5 und 7 auf, die jeweils von einem der Enden 9 bzw. 11 des Spannbandes 1 umschlungen sind, wobei diese Enden über eine Punktschweißverbindung (nicht dargestellt) mit der Oberseite des Spannbandes 1 verbunden sind. Der in der Zeichnung linksseitige Zapfen 5 weist eine Durchgangsbohrung für eine Spannschraube 13 auf, während der andere Zapfen 7 als geschlitzte Hülse gestaltet ist, die einen Wanddurchbruch aufweist, über den der Schaft der Schraube 13 in den Zapfen 7 einlegbar ist. Um für den Spannvorgang die Enden 9 und 11 einander anzunähern, d. h. das Spannband 1 zusammenzuziehen, befindet sich auf der Spannschraube 13 eine Spannmutter 15, siehe Fig. 2.

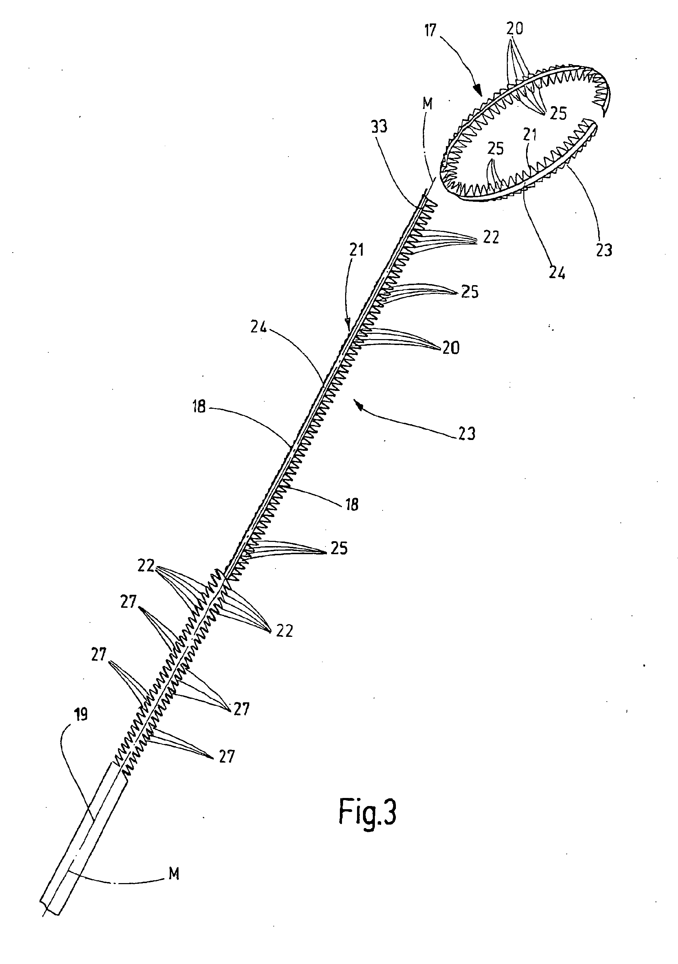

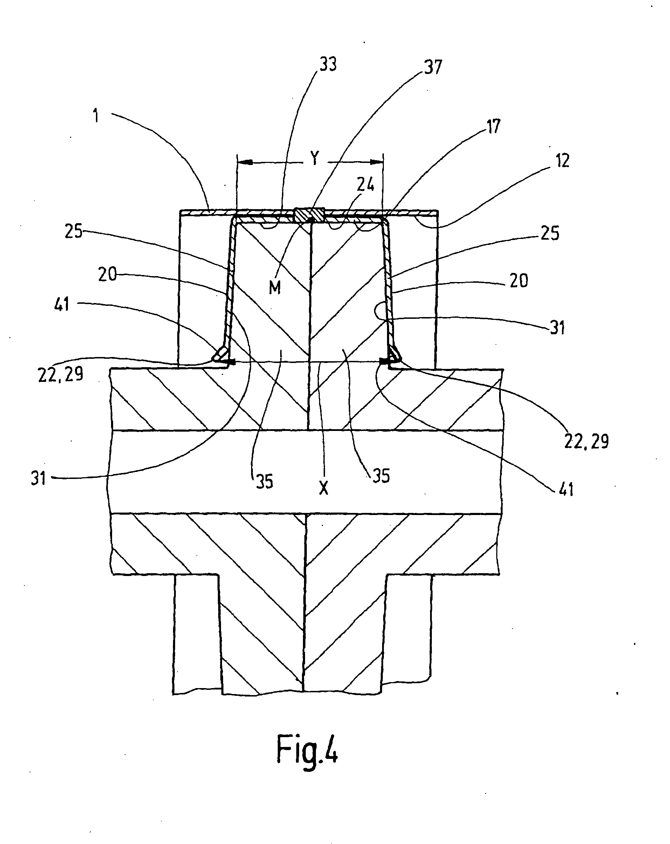

Als weiteres Hauptteil der erfindungsgemäßen Schelle ist ein Einlegeband vorgesehen, das in Fig. 3 einzeln dargestellt und als Ganzes mit 17 bezeichnet ist. Wie ebenfalls in Fig. 3 verdeutlicht ist, ist das Einlegeband 17 aus einem flachen Stahlblechband 19 geformt, das aus einer für einen jeweiligen Klemmvorgang geeigneten Stahllegierung besteht. Die Gestalt der aus dem Band 19 geformten Halteteile 25 ist am deutlichsten aus Fig. 1 erkennbar. Wie gezeigt, bilden die Halteteile 25 am Einlegeband 17 zwei Zahnreihen, nämlich eine in Fig. 1 und 2 vorn liegende Zahnreihe 21 und eine nur in Fig. 1 sichtbare, dahinterliegende Zahnreihe 23, jeweils gebildet durch eine Folge gleich ausgebildeter Zähne 25 (in den Figuren lediglich teilweise beziffert) als Halteteile. Aus Fig. 3 ist am deutlichsten ersichtlich, dass die Zahnreihen 21, 23 dadurch gebildet sind, dass von beiden Seitenrändern 18 des das Ausgangsmaterial bildenden Bandes 19 eine Abfolge V-förmiger Einschnitte 27 (in den Figuren lediglich einige beziffert) gebildet sind. Diese sind jeweils V-förmig gestaltet, wobei die Öffnungen der Einschnitte 27 jeweils voneinander einen geringen Abstand besitzen, so dass die zwischen den Einschnitten 27 gebildeten Zähne 25 keine scharfen Spitzen sondern abgestumpfte Spitzen 29 besitzen. Wie am deutlichsten aus Fig. 3 zu ersehen ist, sind die zwischen den Einschnitten 27 gebildeten Zähne 25 bei beiden Zahnreihen 21 und 23 jeweils aus der Fläche des Bandes 19 um eine durchgehende Biegelinie hochgestellt, die sich am jeweils inneren Ende der Einschnitte 27 im Abstand von der Längsmittellinie M des Bandes 19 an den inneren Enden der Einschnitte 27 befindet. Fig. 3 zeigt den Herstellungsvorgang, bei dem die Zähne der einen Zahnreihe 21 bereits hochgestellt sind, während die Zähne 25 der anderen Zahnreihe 23 noch nicht vollständig hochgestellt sind, wobei jedoch bereits die Biegelinie und ein zwischen den Zahnreihen 21, 23 verbleibender, flacher Zentralstreifen 33 erkennbar sind, siehe auch Fig. 4.

Aus Fig. 1 ist auch erkennbar, dass die Zähne 25 nicht senkrecht aus der angrenzenden Fläche des Einlegebandes 17 hochgestellt sind, sondern jeweils eine leichte Neigung nach außen hin, so dass die Zähne 25 zueinander divergieren, aufweisen. Dadurch bilden sie die eigentlichen Klemmbereiche 31, die beim Spannen am betreffenden Gegenstand klemmend anliegen, hauptsächlich an der Innenfläche der Zähne 25, wie es in Fig. 4 beispielhaft beim Spannen von ringförmigen Flanschteilen von miteinander zu verbindenden, medienführenden Rohrsegmenten 35 verdeutlicht ist. Beim Spannen führt die Spannkraft zu einer elastischen Auslenkung der Zähne 25. Die über die Klemmbereiche 31 übertragene Spannkraft ist durch Wahl der Anzahl der Zähne 25, der Elastizitätseigenschaften des Werkstoffes, und die Dimensionierung der Zähne optimal an den jeweiligen Verwendungszweck anpassbar. Wie insbesondere aus Fig. 4 erkennbar ist, weisen die Zähne 25 an ihre Spitzen 29 angrenzend ein gegenüber dem Hauptteil der Zähne 25 nach außen leicht abgebogenes Endstück 41 auf, das beim Montagevorgang der Schelle deren richtiges Positionieren am betreffenden Gegenstand erleichtert.

Beim gezeigten Ausführungsbeispiel weisen die Zähne 25 beider Zahnreihen 21, 23 eine nach außen von dem Zentralbereich 33 weggerichtete Neigung auf. Es versteht sich, dass je nach Einsatzzweck der Schelle eine Neigung der Zähne nur bei einer Zahnreihe 21 oder 23 vorgesehen sein kann oder dass bei einer oder beider Zahnreihen eine unterschiedliche Anzahl von Zähnen in unterschiedlicher Abfolge geneigt oder nicht geneigt sein könnte. Beim gezeigten Beispiel sind die Einschnitte 27 und damit die gebildeten Zähne 25 je einander paarweise gegenüberliegend. Es versteht sich, dass eine derartige fluchtende Anordnung nicht erforderlich ist, sondern die Zähne 25 der Zahnreihen 21, 23 auch zueinander versetzt sein könnten.

Beim gezeigten Beispiel sind Spannband 1 und Einlegeband 17 an einer Verbindungsstelle 37 miteinander verbunden, die sich auf halber Länge des Einlegebandes 17 befindet. Die Verbindung kann durch Schweißen, Nieten oder andere Verbindungsmittel erfolgen. Die gegenseitige Verbindung ermöglicht es, die Schelle in vormontiertem Zustand mit unverlierbarem am Spannband 1 gesichertem Einlegeband 17 zur Verfügung zu stellen. Dessen ungeachtet bleibt die Möglichkeit der ausgleichenden Verschiebebewegung zwischen Spannband 1 und Einlegeband 17 erhalten, wenn die Verbindung lediglich an einer einzigen Verbindungsstelle 37 erfolgt. Anstelle der metallischen Bänder können auch solche aus einem geeigneten Kunststoffmaterial treten.

Wie insbesondere die Querschnittszeichnung nach der Fig.4 zeigt, liegt das Einlegeband 17 mit seiner Außenumfangsfläche an der Innenumfangsfläche des Spannbandes 1 im montierten Zustand an und stützt sich insoweit auf der Innenseite 12 des Spannbandes 1 ab. Des weiteren ist die Schnittanordnung symmetrisch angeordnet und die Mittellinie M des Einlegebandes 17 erstreckt sich im wesentlichen in derselben Ebene wie die Trennstelle der beiden aneinanderstoßenden Rohrflanschteile 35. Ferner ergibt sich aus der Darstellung nach der Fig.4, dass die jeweiligen Flächenteile 20 von der Mittellinie M des Einlegebandes 17 derart weg nach außen geneigt sind, dass zumindest im montierten Zustand der Bandschelle der freie Abstand X zwischen den Enden 22 der entlang den beiden Seitenrändern 18 paarweise gegenüberliegenden Flächenteilen 20 einen größeren Abstand X voneinander einnimmt als die vorgebbare Breite Y der Grundfläche 24 des Einlegebandes 17 ist.

Die dahingehende Breite Y der Grundfläche 24 ergibt sich durch den Abstand zwischen den beiden benachbart gegenüberliegend hochgestellten Flächenteilen 20 um die jeweilige Biegelinie. Der Neigungswinkel zwischen der Grundfläche 24 des Einlegebandes 17 und dem jeweils hochgestellten Flächenteil 20 um die Biegelinie beträgt mehr als 90° und liegt vorzugsweise im Bereich zwischen 95° und 105°. Da die Flächenteile 20 um die Biegelinie elastisch nachgiebig mit der Grundfläche 24 des Einlegebandes 17 verbunden sind, bilden diese mit zunehmendem Aufschieben auf die benachbarten Rohrflansche 35 einen sich weitenden Klemmkanal aus, wobei im nicht montierten Zustand der Klemmkanal im Querschnitt gesehen verringert sein kann und erst mit Aufschieben des Einlegebandes 17 sich verbreitert, indem der Abstand X zwischen den freien Enden der Flächenteile 20 dann zunimmt. Demgemäß wäre es auch möglich, im nicht montierten Zustand einen Winkel zwischen dem jeweils hochgestellten Flächenteil 20 und der Grundfläche 24 des Einlegebandes 17 im Bereich von 90° vorzusehen, so dass dann erst später mit Aufschieben des Einlegebandes die Aufspreizung erfolgt und die beiden benachbart gegenüberliegenden Flächenteile 20 sich voneinander wegneigen, wobei bei einer dahingehenden Ausgestaltung hilfreich ist, dass im Sinne einer Einführhilfe die Spitzen 29 nach außen abgeschrägt sind.

## Patentansprüche

1. Bandschelle mit einem flachen, insbesondere metallischen Spannband (1), das mittels eines an seinen Enden (9, 11) befindlichen Spannverschlusses (3) spannbar ist, und mit an der Innenseite (12) des Spannbandes (1) befindlichen Halteteilen (25), die im Bereich beider Seitenränder (18) des Spannbandes (1) in Abständen voneinander angeordnete Klemmbereiche (31) bilden, wobei die Halteteile (25) an einem an der Innenseite (12) des Spannbandes (1) anliegenden flachen, vorzugsweise metallischen Einlegeband (17) durch Flächenteile (20) desselben gebildet sind, die aus einer Grundfläche (24) des Einlegebandes (17) hochgestellt sind, **dadurch gekennzeichnet, dass** zumindest ein Teil dieser Flächenteile (20) von der Mittellinie (M) des Einlegebandes (17) derart weg nach außen geneigt ist, dass zumindest im montierten Zustand der Bandschelle der freie Abstand (X) zwischen den Enden (22) der entlang den beiden Seitenrändern (18) paarweise gegenüberliegenden Flächenteilen (20) einen größeren Abstand (X) voneinander einnimmt als die vorgebbare Breite (Y) der Grundfläche (24) des Einlegebandes (17) ist.

2. Bandschelle nach Anspruch 1, **dadurch gekennzeichnet, dass** zur Bildung von Halteteilen in Form von Zähnen (25) dreieckähnlicher Gestalt von beiden Seitenrändern (18) des Einlegebandes (17) her in diesem eine Folge von V-förmigen Einschnitten (27) ausgebildet ist, deren innere Enden einen Abstand von der Mittellinie (M) des Einlegebandes (17) besitzen und deren äußere Öffnungen voneinander einen eine abgestumpfte Spitze (29) der Zähne (25) bildenden Abstand besitzen, die in die freien Enden (22) der Flächenteile (20) ausmünden.

3. Bandschelle nach Anspruch 2, **dadurch gekennzeichnet, dass** die die Halteteile bildenden Zähne (25) beider gebildeter Zahnreihen (21, 23) um Biegelinien hochgestellt sind, die an den Enden der Einschnitte (27) parallel zur Mittellinie (M) des Einlegebandes (17) verlaufen.

4. Bandschelle nach einem der Ansprüche 1 bis 3, **dadurch gekennzeichnet, dass** die Halteteile (25) am Einlegeband (17) zueinander paarweise gegenüberliegend sind.

5. Bandschelle nach Anspruch 3 oder 4, **dadurch gekennzeichnet, dass** die Zähne (25) in ihrem an ihre Spitze (29) angrenzenden Endabschnitt (41), der gegenüber dem an den Zahngrund angrenzenden Hauptabschnitt eine wesentlich geringere Höhe besitzt, nach außen hin abgebogen sind.

6. Bandschelle nach einem der Ansprüche 3 bis 5, **dadurch gekennzeichnet, dass** die Zähne (25) der an einem Seitenrand (18) des Einlegebandes (21) befindlichen einen Zahnreihe (21) sämtlich nach außen hin geneigt sind.

7. Bandschelle nach einem der Ansprüche 3 bis 5, **dadurch gekennzeichnet, dass** die Zähne (25) beider Zahnreihen (21, 23) nach außen hin geneigt sind.

8. Bandschelle nach einem der Ansprüche 3 bis 7, **dadurch gekennzeichnet, dass** in einer oder beiden Zahnreihen (21, 23) ein Teil der Zähne (25) nach außen geneigt oder gegenüber der Fläche des Einiegebandes (17) ohne Neigung ist.

9. Bandschelle nach einem der Ansprüche 3 bis 8, **dadurch gekennzeichnet, dass** in einer oder beiden Zahnreihen (21, 23) die geneigten und nicht geneigten Zähne (25) einander in alternierender Folge abwechsel n.

10. Bandschelle nach einem der Ansprüche 1 bis 9, **dadurch gekennzeichnet, dass** das Einlegeband (17) an zumindest einer Verbindungsstelle (37) mit der Innenseite (12) des Spannbandes (1) verbunden ist.

11. Bandschelle nach Anspruch 10, **dadurch gekennzeichnet, dass** die Verbindungsstelle (37) im Bereich der halben Länge des Einlegebandes (17) gelegen ist, das sich von Ende (9) zu Ende (11) des Spannbandes (1) durchgehend erstreckt.
